# EUROPEAN PATENT APPLICATION

(11) **EP 4 841 484 A1**
(43) Date of publication of application: **18.11.2026**
(21) Application number: 25275032.8
(22) Date of filing: 12.05.2025
(51) Int. Cl.: G06F 18/25, G06V 10/26, G06V 20/56

(54) **MACHINE VISION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a computer-implemented method of determining a distance to an object from an entity in a real-world maritime environment in which the entity operates, the computer-implemented method comprising: capturing an image frame from a camera attached to the entity; detecting an object in the image frame; estimating a first distance and a first uncertainty associated with the distance to the object from the entity using a first cue; estimating a second distance and second uncertainty associated with the distance to the object from the entity using a second cue, wherein the second clue is complementary to the first cue, and determining the distance to the object using a combination of the first and second distance estimations and the first and second uncertainties.

## Description

### FIELD

The present invention relates to computer-implemented methods of determining a distance to an object, computer-implemented methods of operating an autonomous system, and transitory, or non-transitory, computer-readable media.

### BACKGROUND

One of the key challenges to obstacle localisation using machine vision is that accurate distance estimation is difficult at longer ranges. Existing literature focuses on indoor scenarios where distances are typically very short (<10m) or urban scenarios relating to self-diving cars where distances are usually <300m. By contrast, seascapes tend to be sparsely populated with a disproportionate number of distant objects, appearing as far out as the visible horizon. Even for a camera at a low elevation on a small vessel the visible horizon can easily exceed 5km.

It is an aim of the subject matter of the present disclosure to improve on the prior art.

### SUMMARY

According to first aspect of the present invention, there is provided a computer-implemented method of determining a distance to an object from an entity in a real-world maritime environment in which the entity operates, the computer-implemented method comprising: capturing an image frame from a camera attached to the entity; detecting an object in the image frame; estimating a first distance and a first uncertainty associated with the distance to the object from the entity using a first cue; estimating a second distance and second uncertainty associated with the distance to the object from the entity using a second cue, wherein the second clue is complementary to the first cue, and determining the distance to the object using a combination of the first and second distance estimations and the first and second uncertainties.

Advantageously by combining a first and second distance estimate in situations wherein the distance to an object is unknown, a complimentary first cue and a second cue may provide a greater accuracy distance measurement than may be achieved with the first or second cue separately.

Using distance estimates derived from an image frame from a camera allows a distance estimate to be generated when a distance to an object cannot be determined from other methods such as radar when the object has too small a radar cross section or when other systems are not functioning correctly hence adding redundancy or fused to improve robustness of detection systems.

Additionally, by using machine vision an entity can comply with convention on the international regulations for preventing collisions at sea, 1972 (COLREGs) in regard to maintaining a lookout by sight.

In an embodiment, estimating the first distance comprises: generating a bounding box estimation using the object classifier model; determining dimensions of the object from the object classification, and estimating the first distance to the object by comparing the dimensions of the object to the dimensions of the bounding box.

In an embodiment, determining the dimensions of the object from the object classification comprises: estimating a heading of the object using the object classifier model, wherein, the object classifier model is further trained to generate an object heading from the image frame; determining dimensions of the object using the estimated heading of the object.

In an embodiment, determining dimensions of the object using the estimated heading of the object comprises determining an apparent width of object w, using object width W, object length L and object heading Θ based on $w = \left|Wcos\left(θ\right)\right| + \left|Lsin\left(θ\right)\right| .$

Calculating heading reduces uncertainty caused by an object's pose relative to the entity causing apparent width to be a combination of both the object's length and width.

In an embodiment, estimating the first distance, *z* , to the object using $z = \frac{w}{2} \frac{1}{tan \left(X\frac{{H}_{FOV}}{2}\right)}$ where *X* is the width of the bounding box normalised as a proportion of image width, *H_{FOV}* is a horizontal field of view of the camera, and w is the apparent width of the object.

In an embodiment, estimating the first uncertainty comprises: determining an uncertainty in the apparent width ${σ}_{w}^{2}$, wherein the uncertainty in the apparent width is predetermined according to the object classification; determining an uncertainty in the width of the bounding box ${σ}_{X}^{2}$, wherein the uncertainty in the width of the bounding box is proportional to the width of the bounding box, and calculating an uncertainty of the first distance to the object estimation ${σ}_{z}^{2}$ based on ${σ}_{z}^{2} = {σ}_{w}^{2} \frac{1}{2 tan \left(\frac{1}{2}{H}_{FOV}X\right)} - {σ}_{X}^{2} \frac{w \frac{1}{2} {H}_{FOV}}{2 {sin}^{2} \left(\frac{1}{2}{H}_{FOV}X\right)} .$

In an embodiment, estimating the second distance comprises: identifying a horizon line in the image frame; determining the position of the object in the image frame; determining a relative distance between the position of the object in the frame and the horizon line, and estimating the second distance to the object based on the relative distance between the position of the object in the frame and the horizon line.
Estimating a distance to the object based on the relative distance between the position of the object in the frame and the horizon line may be achieved using a cue that has an uncertainty lower at lower distances that are closer to the vessel in a maritime environment. In this way, the cue may have an uncertainty that is non-linear to the distance.

In an embodiment, identifying a horizon line in the image frame comprises: segmenting the image frame using a segmentation model trained to segment sky from water in the image; and generating a horizon line as a line between the sky and water in the segmented image. Alternatively, identifying the horizon line may be determined from an inertial measurement unit into image space.

In an embodiment, estimating the second distance comprises: calculating an effective camera height, h, above the water level, estimating a radius of the earth R_{E}; calculating an angle *α* subtended between the visible horizon and the geometric horizon using $α = {cos}^{- 1} \left(\frac{{R}_{E}}{{R}_{E} + h}\right) ;$ calculating an angle *φ* subtended between the object and the visible horizon using the proportionality between the camera vertical field of view and camera resolution, and estimating the second distance z to the object based on $z = \left({R}_{E}+h\right) sin \left(φ+α\right) - \sqrt{{R}_{E}^{2} - {\left[\left({R}_{E}+h\right) cos\left(φ+α\right)\right]}^{2}}$

In an embodiment, estimating the second uncertainty comprises: calculating an uncertainty associated with the position of the object in the frame; calculating an uncertainty associated with the horizon line position; calculating an uncertainty associated with the horizon line angle; and estimating the uncertainty in the second distance by combining the uncertainties in the position of the object in the frame, horizon position and horizon line angle.

In an embodiment, calculating the effective camera height above a water level comprises: determining a sea state value, and calculating the effective camera height using a Rayleigh distribution of wave height at the sea state value.

Calculating the effective camera height using a sea state value reduces the uncertainty in a distance estimate as a result of waves changing the camera height above the water level due to the entity's interaction with the waves.

In an embodiment, determining the distance to the object using a combination of the first and second distance estimations and the first and second uncertainties comprises: constructing a first distribution using the first uncertainty; constructing a second distribution using the second uncertainty; and determining the distance to the object using the first distribution and the second distribution.

In an embodiment, determining the distance to the object using a combination of the first and second distance estimations and the first and second uncertainties further comprises: generating a fused uncertainty for determining the distance to the object using a combination of the first and second distributions.

In an embodiment, generating the fused uncertainty for the distance estimate using a combination of the first and the second distributions comprises: fusing the first and second uncertainties using Bayesian fusion.

According to an aspect of the present disclosure, there is provided a computer-implemented method of operating an autonomous system of a maritime vessel, the computer-implemented method comprising: determining the distance to the object using any preceding claim; determining a trajectory, using the determined distance, to avoid the object, and steering the entity based on the trajectory.

According to an aspect of the present disclosure there is provided a transitory, or non-transitory, computer-readable medium having instructions stored thereon that, when executed by the at least one processor, cause the at least one processor to perform the computer-implemented method of any preceding claim

### BRIEF DESCRIPTION OF THE FIGURES

Embodiments of the invention will now be described by way of example only with reference to the figures, in which:
Figure 1 shows a flow chart summarising a computer-implemented method of determining a distance to an object from an entity in a real-world maritime environment in which the entity operates, according to at least one embodiment;
Figure 2 shows a graph illustrating bounding box errors as a function of ground truth bounding box width using a YOLOv5 standard deviation, according to at least one embodiment;
Figure 3 shows an chart showing objects at varying headings, according to at least one embodiment;
Figure 4 shows a schematic illustrating apparent vessel width depending on relative heading, according to at least one embodiment;
Figure 5 shows a schematic illustrating a relationship between apparent width, range, and horizontal angular extent of an object, according to at least one embodiment;
Figure 6 shows a schematic illustrating a simplified earth geometry, according to at least one embodiment;
Figure 7 shows an image of an open seas environment including an object and a horizon, according to at least one embodiment;
Figure 8 shows a sequence of graphs illustrating estimated range distributions in meters for varying values of delta, according to at least one embodiment;
Figure 9 shows a graph illustrating curve fits for lognormal distribution parameters mu and sigma against average distance in meters, according to at least one embodiment;
Figure 10 shows a flow chart summarising a computer-implemented method of operating an autonomous system of a maritime vessel, according to at least one embodiment; and
Figure 11 shows a computer used to run the computer-implemented methods summarised in Figures 1 and 10.

### DETAILED DESCRIPTION

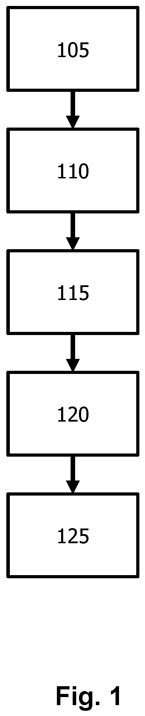

With reference to Figure 1, the computer-implemented method of determining a distance to an object from an entity in a real-world maritime environment in which the entity operates, may be summarised as comprising: capturing 105 an image frame from a camera attached to the entity; detecting 110 an object in the image frame; estimating 115 a first distance and a first uncertainty associated with the distance to the object from the entity using a first cue; estimating 120 a second distance and second uncertainty associated with the distance to the object from the entity using a second cue, wherein the second clue is complementary to the first cue, and determining 125 the distance to the object using a combination of the first and second distance estimations and the first and second uncertainties.

The entity may be a vessel that operates in the maritime environment, wherein the maritime environment is any environment consisting of large bodies of water such as open seas (e.g. an ocean) or inland waterway. The object may be a moving object such as another vessel or a stationary object such as a buoy or an oil rig.

Determining a distance to an object from an entity, may include the dimensions of the object and the dimensions of the entity and the resulting distance calculated incorporating those dimensions, for example the distance estimate may be calculated between the closest point of object and entity. In another embodiment the distance to an object is calculated using the position of the camera to an estimated midpoint of the object.

Capturing an image frame may comprise any analogue or digital method of obtaining and processing information from the light spectrum to generate an image frame.

The image frame may comprise a stationary image or frames from video footage and the camera may be a sensor capable of capturing and generating an image frame.

The camera may be attached to the entity using permanent or non-permanent means, such that the camera captures an image of the maritime environment from the entity's position. The camera may be attached to the tallest part of the entity to increase the distance to a visible horizon. The camera may use a multi-scale detection approach such as SAHI to process images at different resolutions to capture objects of varying sizes.

A cue may be a model configured to estimate a distance to an object. The cue may be a visual cue in that it uses visual features to determine the distance to the object.

First and second are relative terms such that the first distance and the second distance could be estimated in a non-sequential order. For example, the first distance may use a separate cue to the second.

Wherein height in visual field is a cue comprising near objects appearing lower in an image than distant ones. This is an absolute cue and the accuracy of this cue reduces with range.

Wherein Atmospheric Perspective - also known as aerial perspective, is a cue comprising distant objects having lower contrast, colour saturation and less defined texture than near objects

Detecting object in frame may comprise a detection model trained to detect an object in the frame and may be further trained to classify the type of object.

For example, the detection models may include the YOLO family, comprising YOLOv8 and its predecessors YOLOv7, YOLOv6 and YOLOv5. In one embodiment the YOLOv5 model is used.

In one embodiment, the detection model may be trained using an annotated maritime objects data sets such as: Solent Objects, a custom marine object detection dataset comprising 1,500 images and 7,273 annotations from the Solent region of the UK; Thames Objects, a custom marine object detection dataset comprising 600 images and 1,983 annotations from the Thames river area between Embankment and Tilbury Docks, UK; Singapore Maritime Dataset, a publicly available dataset which has been relabelled using object classes consistent with the Solent and Thames datasets, comprising 126 images and 998 annotations; Solent Horizons, a custom dataset featuring 2,375 images from the Solent objects image set and annotated with a single straight line representing the semantically significant sea horizon line; Solent Water, a custom dataset comprising 2,750 images from the Solent objects image set annotated with polygon regions representing the extents of the visible waterspace; Boatpatches, a small custom classification dataset depicting motorboats classified by relative heading to the nearest 30°.

In this embodiment the solent object dataset may be created from a collection of 101,497 unlabelled, semi-structured high resolution images of marine traffic in the Solent (UK) area. The images may be taken using a Sony ILCE-7SM2 with a 27mm lens and an image resolution of 4240 by 2832 (aspect ration 3:2) or a GoPro Hero8 Black with a 3.0mm lens and resolution 4000 by 3000 (aspect ratio 4:3). Taking an image every 1 second will result in a set of images that all look alike. Selecting 1 in every 20 image reduces this lack of variation and also reduces the labelling burden.

In this embodiment the solent object images were structured, sampled, resized and renamed. The resulting image set comprised 5,675 images which represents a random 5% (approximate) sample. A copy of the image set was made and each file resized to speed image loading during the labelling process using the mogrify linux shell command. Image width may be set to 1500 pixels but maintaining its original aspect ratio in order to retain both a high resolution and reduced resolution copy of each image. Of the 5,675 images, a total of 1,500 images were then labelled using the CVAT annotation. Wherein CVAT is an industry leading computer vision annotation tool.

In this embodiment the Solent waterspace dataset comprises 2,750 annotated images from the Solent Objects image set where the extents of the visible waterspace have been annotated using a closed polygon.

In this embodiment the solent Horizons dataset comprises 4,676 images from the Solent Objects image set, annotated with polylines representing the semantically significant Sea Horizon Line. (Not all images contain a horizon). Each horizon line is represented by a line with two ends defined as points. These points do not need to align to the left or right boundaries of the image, and may cover only a portion of the visible horizon where manual registration was most easily achieved.

The training images may comprise a hybrid dataset with validation images and test images containing training annotations, validation annotations and test annotations. Annotated maritime object classes may comprises one or more of: sailing, characterised by any wind powered vessel where the sails are hoisted; sailing (sails down) characterised by any wind powered vessel where the sails are lowered;
motorboat, motor driven vessels such as motor cruisers, speed boats, inflatables and rigid hulled inflatables;
tug, used to manoeuvre other vessels by pushing or pulling them either by direct contact or a tow line;
passenger, includes ferries, cruise liners and river taxis and characterised by a large number of windows along the length of the vessel;
naval, military ships including frigates, destroyers, aircraft carriers, mine hunters and patrol vessels;
structure, marine structures and fixed infrastructure such as sea forts, sea platforms and wind turbines;
cargo, all categories of cargo ships, including container ships, bulk carriers and tankers;
seamark, aids to navigation of all types, including lateral markers, cardinal marks, buoys and special marks as well as poles and structures supporting navigation lights of any type;
workboat, commercial boats typically equipped with cranes or winches less than 24m in length; hovercraft, air cushioned vessels of all types;
fishing, commercial fishing vessels, including trawlers, but excluding vessels for recreational angling; superyacht. large and luxurious motor vessels larger than 24m;
mooring, mooring buoys, typically either ball or can shaped;
barge, flat bottomed vessels for carrying freight, most commonly but not exclusively found in inland waterways, and
PWC, all types of personal watercraft including jetskis, kayaks, rowing boats, paddle boards and windsurfing boards.

In one embodiment the complimentary second cue may be chosen such that the uncertainty in the second distance estimate is lower for a certain range and the first distance estimate uncertainty is lower for a different range of distances such that a broader range of distance estimate is available to the entity using a combination of both estimates. More specifically, in some embodiments, the first cue may have an uncertainty that decreases in a substantially linear fashion with increasing distance to the object, and the second cue may have an uncertainty that decreases in a substantially non-linear fashion with increasing distance to the object.

The complimentary second cue may be chosen such that an uncertainty in the distance to the object is less than the uncertainty in first or second distance estimates within a specific desired range of distances due to the combination of first and second distance estimates.

The computer-implemented method may further comprise determining an uncertainty associated with the distance to the object.

In another embodiment, estimating the first distance comprises: generating a bounding box estimation using the object classifier model; determining dimensions of the object from the object classification, and estimating the first distance to the object by comparing the dimensions of the object to the dimensions of the bounding box. In practice, the dimensions of the object may not be known. However, the dimensions of the object can be estimated based on population statistics.

Dimensions of the object and the bounding box may comprise any of the length, width or height of the object. Preferentially the dimensions may comprise the length or width of the object due to greater availability of population statistics such as that from AIS static reports.

In one embodiment detecting an object in the image further comprises: obtaining object length and object width from the object classifier model, wherein the object classifier model is further trained to generate an object length and object width from the classification

In an embodiment the object classifier model (YOLO) may be trained to generate a bounding box around detected objects using the image frame. This may comprise training the model using intersection over union as the primary performance metric, other metrics are important when attempting to estimate object distance and relative bearing.

In this embodiment the accuracy as a proportion of image height of the predicted bounding box base position (y) compared with ground truth was measured. This accuracy had a standard deviation of 0.3%.

The normalised error of the width (w) of 454 predicted bounding boxes against ground truth width (in pixels) for the Solent marine test dataset was calculated. Dividing the 454 data points into eight logarithmically spaced intervals allowed a calculation of the standard deviation of the bounding box width error in each interval.

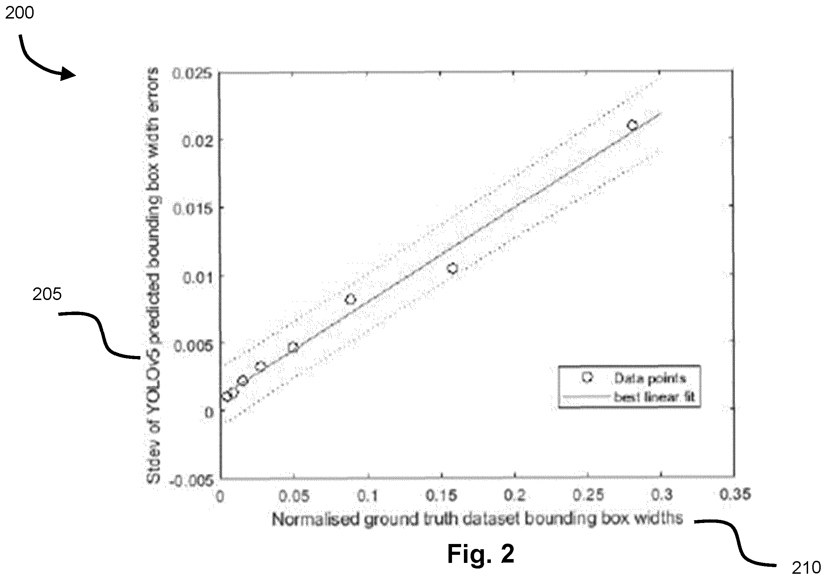

In reference to Figure 2, the relationship 200 between the standard deviation of the normalised error (square root of the first uncertainty associated with the distance to the object) *σ_{X}* in the prediction 205 may be shown to be linearly related to the bounding box width *X* (normalised to image width) 210 and that a simple estimate of the standard deviation is 7% of the bounding box width can be based on: ${σ}_{X} \approx 0.0691 X + 0.001027$ which can be further simplified to: ${σ}_{X} \approx 0.07 X$

The smallest objects that can be reliably detected are around 1.6% of image width. This explains why our error data is based on only 454 predictions from the available 944 ground truth annotations (using an IOU threshold of 0.6) - because many of the ground truth annotations are too small to detect with our model.

In the same embodiment the error in horizontal position of predicted bounding boxes compared with ground truth, as a proportion of image width. The standard deviation of this error is 0.35%.

In another embodiment, determining the dimensions of the object from the object classification comprises: estimating a heading of the object using the object classifier model, wherein, the object classifier model is further trained to generate an object heading from the image frame; determining dimensions of the object using the estimated heading of the object.

Estimating a heading of the object may comprise estimating the orientation of the object relative to the entity.

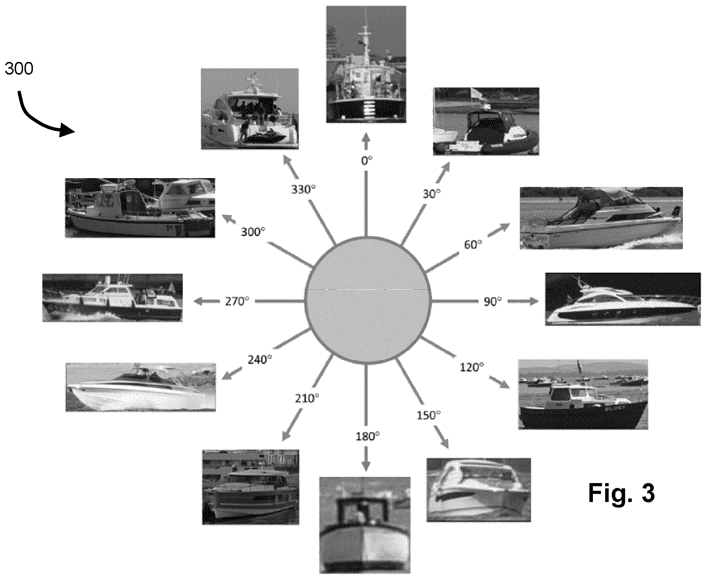

The object classifier model may be further trained to estimate a heading of the object using datasets from real images annotated with the relative orientation of the object. The orientation of the object may use vessel data sets (as previously listed) that are manually annotated. With reference to Figure 3, in an embodiment the 360 degrees of possible relative orientation is split into 30-degree segments 300 and each image is attributed to one of the discrete set of annotations.

The object classifier model may be further trained to estimate a heading of the object using synthetic image generated datasets, wherein the images may be generated by varying one or more of the following parameters: ocean colour, wave scale, ocean choppiness, object distance, object pitch, object roll, object yaw and camera roll. In one embodiment, the parameters may be varied as follows wherein N is normal distribution and U is uniformly distributed.

| Parameter | Value |
|---|---|
| Ocean colour | 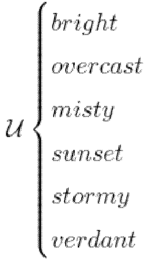 |
| Wave Scale | 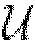 (0.3, 1.2)m |
| Choppiness | 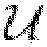 (0.1, 1.5) |
| Distance | 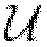 (5, 100)*m* check sealing! |
| Pitch | 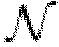 (0, 2)° |
| Roll | 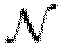 (0, 5)° |
| Yaw | 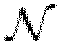 (0, 360)° |
| Camera roll | 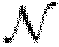 (0, 5)° |

Additionally, the object type, colour invariance and noise in the image may be varied. The images may be generated procedurally using Blender Python API.

The syntenic data generation may include developing a base scene comprising a 90° arc shaped mesh with an ocean modifier applied. An object may be shrinkwrapped to the ocean object close to the origin, to which a camera object is attached. A boat object may be similarly attached to a second mesh shrinkwrapped to the ocean object at a random position. The shrinkwrap mechanism ensures that the camera and boat both "float" with the surface of the ocean. An annotation file may be created containing yaw angle, bounding box dimensions and vessel distance for each image. To calculate the bounding box of the boat in the rendered image, the 3D vertices of the object may first be transformed from object local coordinates to world coordinates, and then projected from 3D to the 2D plane.

The synthetic images may then be domain adapted using unpaired or paired synthetic and real images.

Tools such as CycleGAN may be used provide the domain adaptation between synthetic and real images. Cycle GAN does not require paired images just a collection of synthetic and real images. In this embodiment cycleGAN model is trained for 75 epochs using the tensorflow dataset which comrpises real training images, real test images, synthetic training images and synthetic test images. The domain adaption may then be analysed using T-distributed Stochastic Neighbour Embedding (TSNE) to assess the similarity of the two datasets by visualising high dimensional data via dimensionality reduction. A classifier model may then be trained using the modified synthetic images for example employing transfer learning via a VGG16 model pre-trained on ImageNet using the keras framework. This can be achieved, for example, by implementing a classifier in keras using the keras VGG16 feature extractor with a custom head comprising dense:1024+Relu, 50% dropout, dense:512+Relu, 50% dropout and a final dense:12+softmax layer. 20 epochs can be used for training with an initial learning rate of 1 × 10⁻⁴ and a learning rate schedule which halves the learning rate every 8 epochs. A suitable optimiser may be Adam using sparse categorical cross-entropy and a batch size of 32. It is not necessary to fine-tune the base VGG model.

In an embodiment the classifier model may be further trained using a regression approach or a categorical approach.

Determining the dimensions of the object may comprises a conversion relationship for an object classification in that orientation and as such weight the respective dimensions in that orientation.

In an embodiment, determining dimensions of the object using the estimated heading of the object comprises determining an apparent width of object w, using object width W, object length L and object heading Θ based on $w = \left|W cos\left(θ\right)\right| + \left|Lsin\left(θ\right)\right| .$

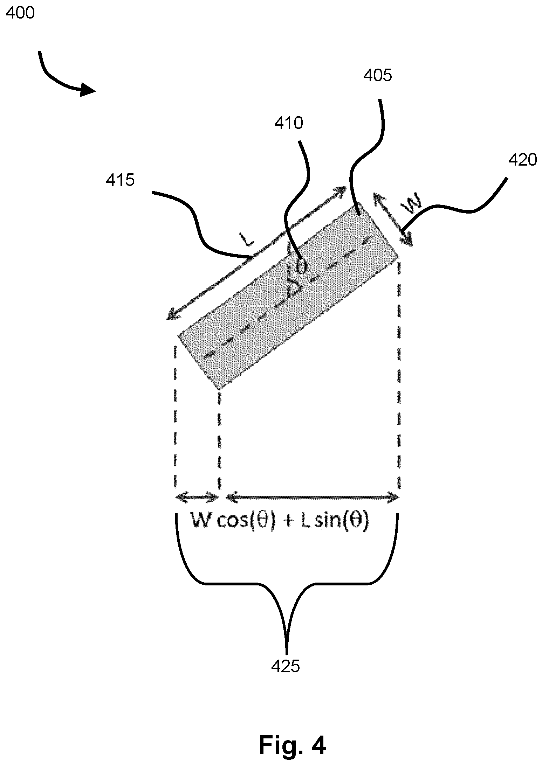

In reference to Figure 4, in an embodiment the apparent width of an object may be the width as viewed from the perspective of a camera mounted to the entity 400 and as such is dependent on the relative orientation of the object. In this embodiment the object is represented by a rectangular shape 405 (that is a not to scale, schematic drawing and is not a direct illustration) and the angle of the object relative to the perspective of a camera mounted to the entity 410, and as such both the length 415 and width of the object 420 contribute to the apparent width 425. The relationship between apparent width, first distance *z* and horizontal angular extent *θ* may be based on. $w = \left|W cos\left(θ\right)\right| + \left|L sin\left(θ\right)\right| .$

The dimensions of L and W may be received from a dataset stored on board the entity associated with a classification of object.

In an embodiment, estimating the first distance, *z* , to the object using $z = \frac{w}{2} \frac{1}{tan \left(X\frac{{H}_{FOV}}{2}\right)}$ where *X* is the width of the bounding box normalised as a proportion of image width, *H_{FOV}* is a horizontal field of view of the camera, and *w* is the apparent width of the object.

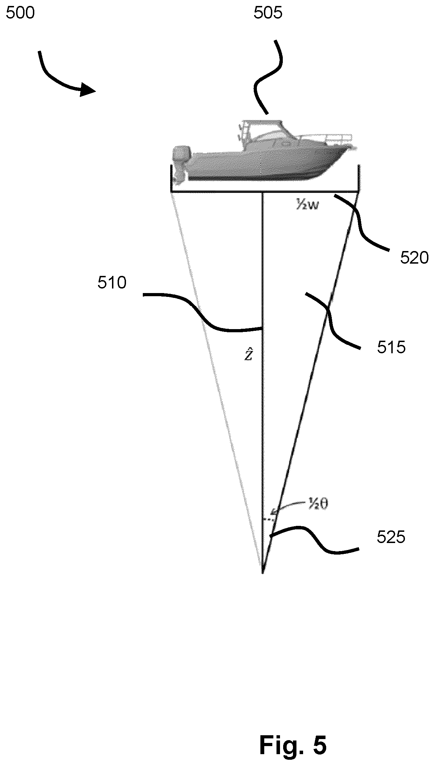

In reference to Figure 5 from the perspective of the camera mounted to the entity 500 wherein an object is a vessel 505 (that is a not to scale, schematic drawing and is not a direct illustration) at a distance *ẑ* 510 from the entity. The distance to the object *ẑ* 510 forms one of the non-hypotenuse sides of a right-angled triangle 515 with half the apparent width *w* 520 of the object forming the other. The angle $\frac{1}{2} θ 525$ formed at the entity (i.e. the angle subtended between the distance to the object *ẑ* and the hypotenuse of triangle 515) is related to the width of the predicted object bounding box *X,* normalised as a proportion of image width, and camera horizontal field of view *H_{FOV}* (in radians).

The method may comprise estimating the first distance using $\hat{z} = \frac{\frac{1}{2} w}{tan \left(\frac{1}{2}θ\right)}$ and by substituting: $\frac{1}{2} θ = \frac{1}{2} {XH}_{FOV}$

The first distance to the object may be estimated using: $\hat{z} = \frac{w}{2} \frac{1}{tan \left(X\frac{{H}_{FOV}}{2}\right)}$

Wherein the mean of the first distance to the object *Ẑ* is determined using the mean of the apparent width w.

In an embodiment, estimating the first uncertainty comprises: determining an uncertainty in the apparent width ${σ}_{w}^{2}$, wherein the uncertainty in the apparent width is predetermined according to the object classification; determining an uncertainty in the width of the bounding box ${σ}_{X}^{2}$, wherein the uncertainty in the width of the bounding box is proportional to the width of the bounding box, and calculating an uncertainty of the first distance to the object estimation ${σ}_{z}^{2}$ based on ${σ}_{z}^{2} = {σ}_{w}^{2} \frac{1}{2 tan \left(\frac{1}{2}{H}_{FOV}X\right)} - {σ}_{X}^{2} \frac{w \frac{1}{2} {H}_{FOV}}{2 {sin}^{2} \left(\frac{1}{2}{H}_{FOV}X\right)} .$

Estimating the first uncertainty may comprises using the variance equation: ${σ}_{x}^{2} \approx {σ}_{u}^{2} {\left(\frac{δx}{δu}\right)}^{2} + {σ}_{v}^{2} {\left(\frac{δx}{δv}\right)}^{2} + …$ and substituting for the uncertainty of the first distance to the object estimation ${σ}_{z}^{2}$ ${σ}_{z}^{2} \approx {σ}_{w}^{2} {\left(\frac{δz}{δw}\right)}^{2} + {σ}_{X}^{2} {\left(\frac{δz}{δX}\right)}^{2}$ such that calculating an uncertainty of the first distance to the object estimation ${σ}_{z}^{2}$ is based on ${σ}_{z}^{2} = {σ}_{w}^{2} \frac{1}{2 tan \left(\frac{1}{2}{H}_{FOV}X\right)} - {σ}_{X}^{2} \frac{w \frac{1}{2} {H}_{FOV}}{2 {sin}^{2} \left(\frac{1}{2}{H}_{FOV}X\right)}$

Wherein the uncertainty in the apparent width ${σ}_{w}^{2}$ may be predetermined according to the object classification. This may be calculated by calculating a distribution of apparent widths for each vessel type and determining the mean and variance for the vessel type for an unknown heading, wherein the uncertainty in the width of the bounding box ${σ}_{X}^{2}$ may be linearly related to the bounding box width *X* (normalised to image width).

In an embodiment, estimating the second distance comprises: identifying a horizon line in the image frame; determining the position of the object in the image frame; determining a relative distance between the position of the object in the frame and the horizon line, and estimating the second distance to the object based on the relative distance between the position of the object in the frame and the horizon line.

Determining the position of the object in the frame may comprise using a previous stated detection and/or classifier model to output a position of the object. Wherein the position may be an the point must be the lower extremity most closely representing the vessel waterline.

In an embodiment, identifying a horizon line in the image frame comprises: segmenting the image frame using a segmentation model trained to segment sky from water in the image; and generating a horizon line as a line between the sky and water in the segmented image.

As stated earlier the horizon line may be a line with two ends that may cover all or only a portion of the visible horizon.

Estimating the second distance may comprise: calculating the angle subtended between the visible horizon and the geometric horizon; calculating the angle φ subtended between the between the object and the visible horizon; calculating the effective camera height h above the maritime environment water level, and estimating the second distance using angle α, angle φ and height h.

In an embodiment, estimating the second distance comprises: calculating an effective camera height, h, above the water level, estimating a radius of the earth R_{E}; calculating an angle *α* subtended between the visible horizon and the geometric horizon using $α = {cos}^{- 1} \left(\frac{{R}_{E}}{{R}_{E} + h}\right) ;$ calculating an angle *φ* subtended between the object and the visible horizon using the proportionality between the camera vertical field of view and camera resolution, and estimating the second distance z to the object based on $z = \left({R}_{E}+h\right) sin \left(φ+α\right) - \sqrt{{R}_{E}^{2} - {\left[\left({R}_{E}+h\right) cos\left(φ+α\right)\right]}^{2}}$

The water level may be the water level of the maritime environment in which the entity is situated, for example in an ocean setting the sea surface would be the water level.

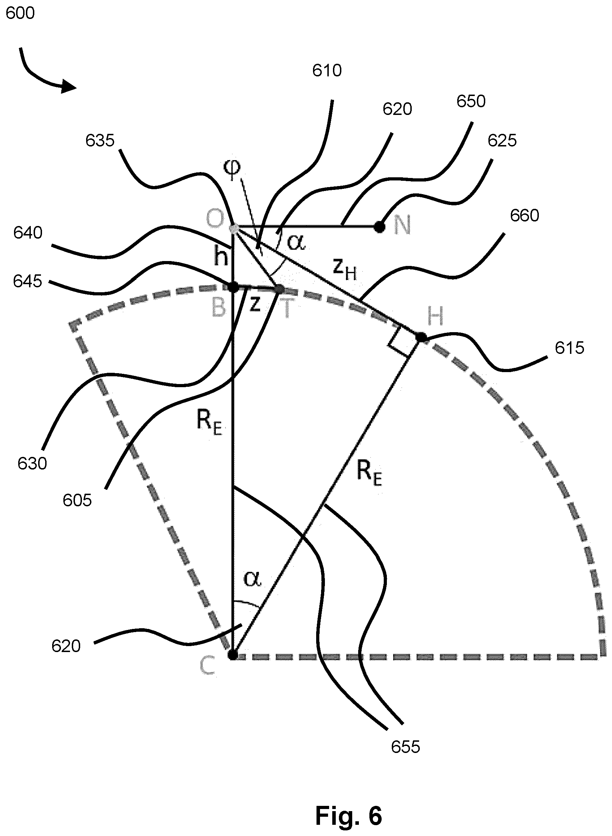

With reference to figure 6 estimating the second distance may comprise determining the distance to the visible horizon H 660. In this embodiment 600 there is a camera **O** 635 at height *h* 640 above a water line **B** 645 and the geometric horizon represented 650 by **ON.** The radius of the earth 655 may be estimated as *R_{E}* = 6.371 × 10⁶m. The distance to the visible horizon 660 **OH** may be calculated using geometry on triangle OCH, as follows: ${z}_{H} = \sqrt{{\left({R}_{E}+h\right)}^{2} - {R}_{E}^{2}} = \sqrt{2 {R}_{E} h + {h}^{2}}$

Given that *R_{E}* is large and *h* is small, this approximates to: ${z}_{H} \approx BH \approx \sqrt{2 {R}_{E} h}$

The visible horizon 615 (point **H**) is where the surface of the sea and the sky appear to meet in the image frame.

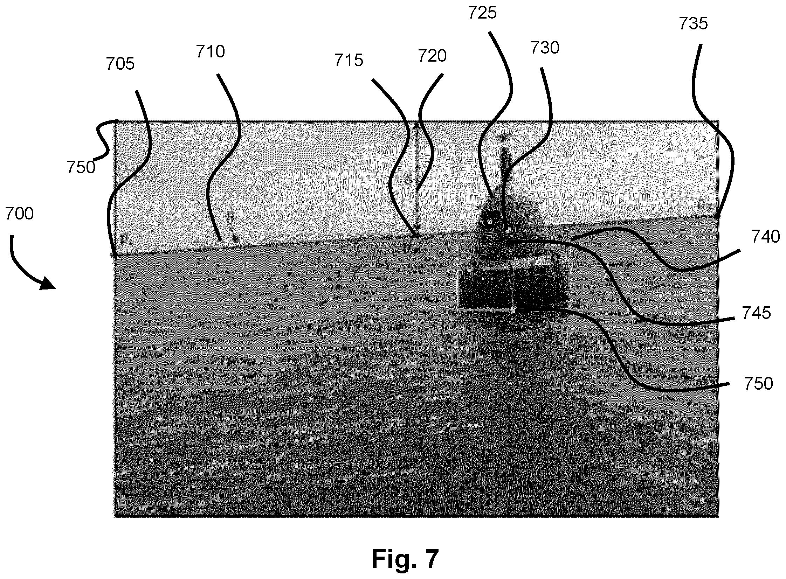

With reference to figure 7, in an embodiment 700 the object is a buoy 725 with a bounding box 740 and determining the position of the object in the position frame comprises, identifying an image origin 750 at the top left corner of the image frame. The horizon line is defined by two points **p₁** 705 and **p₂** 735 and subject to a camera roll angle of *θ* 710. Point **p₃** 715 lies on the horizon at normalised position ( $\frac{1}{2} , δ$) while ${p}_{2} = \left(1,δ-\frac{1}{2}sinθ\right)$, noting that in this section the notation (*x, y*) is used represent a 2-dimensional image coordinate which maps to its 3-dimensional vector representation according to (*x, y*) → [*x, y,* 0]*^{T}.*

The centre of the object bounding box is at (*x, y*) and has width *X* and height *Y* such that point **p₄** 750 lies at position ( $x , y + \frac{1}{2} Y$). The vector Δ 745 passes through **p₄** 750 and is normal to the horizon line. The unit vector Δ can be calculated as: ${Δ}_{_} = \frac{1}{\left|{p}_{2}-{p}_{3}\right|} \left[\begin{matrix}0 & 1 & 0 \\ - 1 & 0 & 0 \\ 0 & 0 & 0\end{matrix}\right] \left({p}_{2}-{p}_{3}\right)$

The vector Δ 745 intersects the horizon at a point **p₅** 730 located on the horizon plane, which is represented by two orthogonal vectors, both starting at point **p₃** 715: ${p}_{5} = {p}_{3} + κ \left({p}_{2}-{p}_{3}\right) + λ {Z}_{_}$ where *Z* = [0 0 1]*^{T}* and the position along the normal to the horizon is: ${p}_{5} = {p}_{4} - ν {Δ}_{_}$

Solving for *κ, λ*, and *v* results in: $\left[\begin{matrix}κ \\ λ \\ ν\end{matrix}\right] = {\left[\left({p}_{2}-{p}_{3}\right) {Z}_{_} {Δ}_{_}\right]}^{- 1} \left({p}_{4}-{p}_{3}\right)$ such that: ${Δ}_{_} = ν {Δ}_{_}$

There may be a possibility that for an object in the far distance, which will appear close to the horizon line, errors in the prediction of the bounding box and errors in the prediction of the horizon line may cause point **p₂** 735 to appear slightly above the horizon, and this is not physically possible. To avoid this outcome, the angle below the horizon, *φ* is calculated as follows: $φ = \left\{\begin{matrix}\left|{Δ}_{_}⊙\left({H}_{FOV}, {V}_{FOV}\right)\right| \\ 0\end{matrix}\right.$ where *v* < 0
where *v* ≥ 0
where ⊙ is the Hadamard product.

Similarly, the azimuth angle, Ψ of the object from the camera centreline is: $Ψ = \left|\left({p}_{5}-{p}_{3}\right)⊙\left({H}_{FOV}, {V}_{FOV}\right)\right|$ which represents the relative bearing to the object in relation to the centreline of the camera.

With reference to Figure 6 the object at T 605 forms the angle TOH 610 subtended between the object at T 605 and the visible horizon H 615 is *φ*, while the angle HON 620 subtended between the visual horizon H 615 and geometric horizon N 625 (the line perpendicular to the earth's plumb line) is *α*, defined as: $α = {cos}^{- 1} \left(\frac{{R}_{E}}{{R}_{E} + h}\right)$

The second distance z 630 may be estimated using a simpler form of Kinzey equation excluding atmospheric adjustments due to the ranges possible between an entity and the horizon, this results in the estimate: $z \approx \left({R}_{E}+h\right) sin \left(φ+α\right) - \sqrt{{R}_{E}^{2} - {\left[\left({R}_{E}+h\right) cos\left(φ+α\right)\right]}^{2}}$

Errors in the estimation of both the horizon and the object position cause larger uncertainties in the measurement of small values of Δ (with reference to Figure 7 745), and the longest ranges occur when Δ 745 is smallest. The uncertainty in the second distance estimate can be significantly reduced by raising the elevation of the camera. For example, uncertainties for a camera elevation of 15m (for a large ship) are lower than at 2.5m (for a small boat).

With reference to Figure 6, angle *φ* 610 may be proportional to the number of pixels between the object and the horizon, for example if the resolution of the camera is 1000 pixels vertically and vertical field of view was 100 degrees then every pixel equates to 0.1°

Identifying a horizon line may comprise identifying the sea-level horizon, which is the visible boundary between the sea and sky, and as such bounds the sea region providing a reference for pose (for example for pitch and roll) and the estimation of object range using a position-in-frame method.

Identifying a horizon line may comprise a combination of noise reduction (filtering), Canny edge detection followed by Hough or Radon transformations to extract straight line features from the edge map. The approach is simple to implement but performs poorly when the horizon is not the dominant line feature, or where the horizon is not a straight line due to clutter near the horizon line or in the presence of irregular land features, or where the horizon line is indistinct due to haze or sea surface reflections.

Identifying a horizon line may comprise using a pyramid scene parsing network implemented as a deep neural network and may work in conjunction with a super-pixel Simple Linear Iterative Clustering (SLIC) algorithm to refine the edges.

In another embodiment identifying a horizon line may comprise using multi-task learning to (a) classify candidate lines as semantic or not, and (b) optimise the line location through regression.

In another embodiment identifying a horizon line comprises segmenting the image frame by initial semantic segmentation to create a binary mask, upon which a horizon line is generated by edge detection and line extraction.

For example, deep learning based segmentation models such as a symmetrical encoder-decoder architecture models can be used

In an embodiment training data for the semantic segmentation of water extents may be based on the Solent Waterspace dataset. For each of 2,750 colour images, a closed polygon represents the waterspace extents. Polygon annotations were extracted from the CVAT tool in Datumaro v1.0 format. Each annotation was then rendered into a monochrome bitmask with values 0 representing sea and 255 representing sky or land. These files were saved in .png format, such that the input to the segmentation model training process was a series of [image mask] pairs.

In an embodiment, ground truth for horizon lines was derived from the Solent Semantic Horizons dataset. This features 4,676 images with horizons labelled as two-point polylines.

To ensure consistency from image to image, particularly in the case where image resolution may vary, the polyline points *p*₁ *=* [*x*₁ *y*₁]*^{T}* and *p*₂ *=* [*x*₂ *y*₂]*^{T}* are transformed to an angle *θ* and a vertical offset *δ* which relates to a virtual point ${p}_{3} = {\left[\frac{1}{2}{I}_{x} {δI}_{y}\right]}^{T}$ which lies on the vertical centreline of the image.

In reference to Figure 7 the Horizon angle *θ* 710 for the forward-facing camera in this embodiment depends mainly on vessel roll while vertical position *δ* 720 depends mainly on vessel pitch.

Generating a horizon line may comprise Canny edge detection is performed on the output of the segmentation model, to identify the boundary between the sea and non-sea regions. Hough transform is then applied to the resulting line(s) to identify the most significant straight-line element. The output straight line element will then align to the semantically significant horizon line.

The segmentation model may be implemented using TensorFlow and Keras. Segmentation models such as DeepLabv3 employ feature encoders such as resnet, pre-trained on datasets such as Imagenet. However, this pre-training may be unhelpful as ocean features are unlike those objects contained in the pre-trained model.

In an embodiment a shallow autoencoder is trained and does not rely on transfer learning from a pre-trained feature extractor, for example the autoencoder may be based on U-NET, for example training for six epochs achieves a pixel-wise validation accuracy of 97.6%.

The processing first steps may comprise using a colour input image, ground truth bitmasks, created from the annotated polygons imported from CVAT, segmentation model - where non-waterspace regions have been segmented, running a Canny edge detector, and extracting a Hough line. This process performs less well (resulting in gross errors in the horizon line prediction) where there is significant reflection from a low setting sun in the colour input image. This baseline model may achieve a horizon prediction performance positional error of *σ_{δ}* = 0.0616 as a proportion of image height, and an angular error of *σ_{θ}* = 0.878°.

The embodiment may further comprise an ASPP module just before the autoencoder backbone. This Atrous Spatial Pyramid Pooling mechanism comprises four concatenated dilated convolutions - specifically one 1x1 kernel plus three 3x3 kernels with dilations of 3, 6 and 9 respectively. The angular error *σ_{θ}* for this model increased from 0.88° to 1.60°, although the positional error did improve from 0.062 to 0.041.

The embodiment may further comprise a Spatial Attention (SA). The spatial attention module takes its input from an early stage of the encoder and employs a 1×1 convolution to embed spatial features into a single multi-channel pixel. This channel is then up-sampled to match the 16×16 resolution of the backbone, hence embedding global spatial attention into every channelwise pixel. Results here may show a improvement compared with the baseline U-NET model, with positional error improving from 0.062 to 0.037 and with comparable angular errors.

The embodiment may further comprise combining both Spatial Attention(SA) and ASPP modules together, to realise improvements in both positional and angular errors. This final model (U-NET+SA+ASPP) may achieve better results, with pixelwise segmentation accuracy of 99.16% after 20 epochs and positional error of 0.037 and angular error 0.61°.

In an embodiment, estimating the second uncertainty comprises: calculating an uncertainty associated with the position of the object in the frame; calculating an uncertainty associated with the horizon line position; calculating an uncertainty associated with the horizon line angle; and estimating the uncertainty in the second distance by combining the uncertainties in the position of the object in the frame, horizon position and horizon line angle.

Calculating an uncertainty associated with the position of the object in the frame may be dependent on the model used to determine the position of the object in the image frame. In one embodiment using a model combining an autoencoder based on U-NET, Spatial Attention(SA) and ASPP modules results in an uncertainty characterised by a standard deviation of 0.3% normalised to the image frame height.

Calculating an uncertainty associated with the horizon line position may be dependent on the model used to determine the position of the object in the image frame. In one embodiment using a model combining an autoencoder based on U-NET, Spatial Attention(SA) and ASPP modules results in an uncertainty characterised by a standard deviation of 3.7% of the image frame height

Calculating an uncertainty associated with the horizon line angle may be dependent on the model used to determine the position of the object in the image frame. In one embodiment using a model combining an autoencoder based on U-NET, Spatial Attention(SA) and ASPP modules results in an uncertainty characterised by a standard deviation of 0.6°

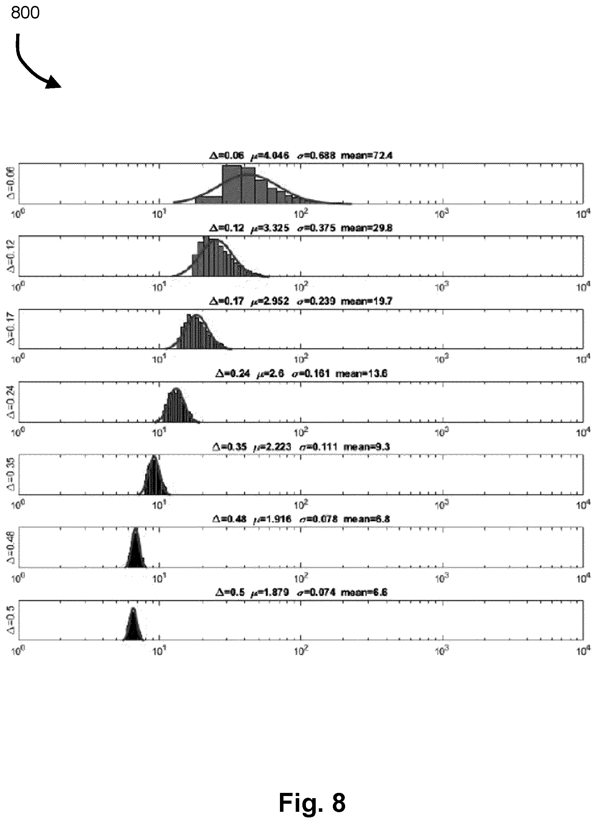

Using the above uncertainties of the bounding box position (*p*₄) and the horizon (*δ*, *θ*), using Monte-Carlo analysis to compute object distance uncertainty as a function Δ, where Δ is a tangible and intuitive measure of the object position in the frame. With reference to Figure 8 800 in an embodiment the distribution for different object positions-in-frame for a camera elevation of 2.5m and predicted range is subject to a lognormal distribution and as such the standard deviation (square root of uncertainty) is non-linear to the second distance to the object estimate.

A lognormal distribution may be characterised by the parameters µ and σ, and the median range is given by µ and the average value is given by: $mean = {e}^{\left(μ+\frac{{σ}^{2}}{2}\right)}$

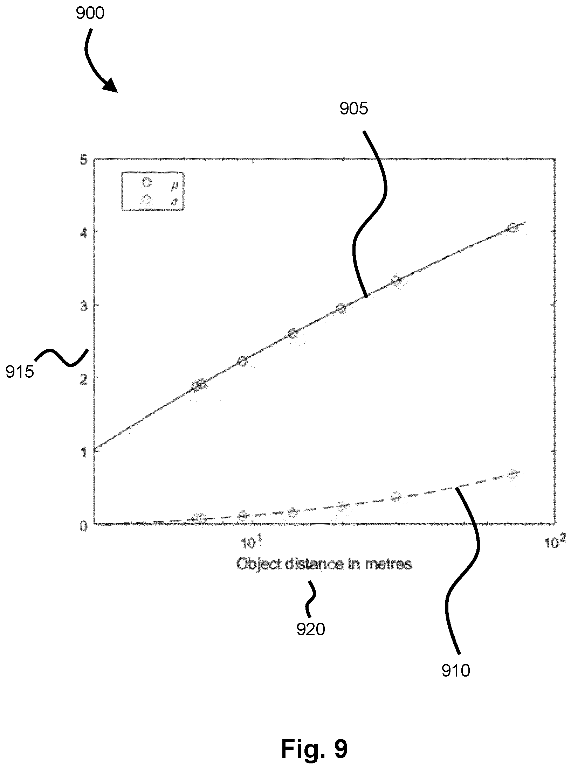

With reference to Figure 9, characterising lognormal distribution parameters 915 µ 905and σ 910 against average distance in metres 920 (related to estimated object range *ẑ* ) results in a relationship 900 shown by the equations below. In this embodiment the relationship is for a camera elevation (effective camera height) of 2.5m but these steps can be repeated for any camera elevation. The relationships represented by curve fits 900 are $μ = - 10.75 {\hat{z}}^{- 0.1223} + 10.42$ $σ = 0.06424 {\hat{z}}^{0.5946} - 0.1284$

In an embodiment, calculating the effective camera height above a water level comprises: determining a sea state value, and calculating the effective camera height using a Rayleigh distribution of wave height at the sea state value.

Calculating the effective camera heigh may comprise modifying the effective camera elevation (h) by a term drawn from the population of wave heights.

The height of sea waves may be approximated to a Rayleigh distribution based on the significant wave height *Hₛ.* Significant wave height is dependent on sea state, as shown in the below table for sea conditions up to "moderate":

| Sea State | *Hₛ* | Description |
|---|---|---|
| 0 | 0m | Calm (glassy) |
| 1 | 0.1m | Calm (ripples) |
| 2 | 0.5m | Smooth |
| 3 | 1.25m | Slight |
| 4 | 2.5m | Moderate |

The sea state value may be determined using information available to the entity such as meteorological information , wave radar, weather buoys etc. In another embodiment the sea state value may be determined by detecting the sea state using a detection model trained to classify sea states.

In an embodiment, determining the distance to the object using a combination of the first and second distance estimations and the first and second uncertainties comprises: constructing a first distribution using the first uncertainty; constructing a second distribution using the second uncertainty; and determining the distance to the object using the first distribution and the second distribution.

In an embodiment, determining the distance to the object using a combination of the first and second distance estimations and the first and second uncertainties further comprises: generating a fused uncertainty for determining the distance to the object using a combination of the first and second distributions.

In an embodiment, generating the fused uncertainty for the distance estimate using a combination of the first and the second distributions comprises: fusing the first and second uncertainties using Bayesian fusion.

Generating a first distribution and a second distribution may comprise normally distributed populations with known mean and standard deviation (*µ_{A}, σ_{A}*) and (*µ_{B}, σ_{B}*) then the two estimates may be combined as a variance weighted average as follows: $\hat{σ} = {\left(\frac{1}{{σ}_{A}^{2}}+\frac{1}{{σ}_{B}^{2}}\right)}^{- 1}$ and $\hat{μ} = \left(\frac{{μ}_{A}}{{σ}_{A}^{2}}+\frac{{μ}_{B}}{{σ}_{B}^{2}}\right) \hat{σ}$

The first distribution may be a normally distributed population, and the second distribution may be lognormally distributed. The two distributions may be fused using Bayesian fusion to determine the distance to the object, wherein Noisy observation *z*₁, derived from the first distance estimate that is normally distributed: ${z}_{1} \approx N \left({μ}_{1}, {σ}_{1}^{2}\right)$ while noisy observation *z*₂, derived from the second distance estimate that is lognormally distributed: ${z}_{2} \approx LogN \left({μ}_{2}, {σ}_{2}^{2}\right)$

The likelihood function for measurement *z*₁ is: $P \left(\left.{z}_{1}\right|{z}_{f}\right) = \frac{1}{\sqrt{2 {πσ}_{1}^{2}}} exp \left(-\frac{{\left({z}_{1}-{z}_{f}\right)}^{2}}{2 {σ}_{1}^{2}}\right)$ while the likelihood function for measurement *z*₂ is: $P \left(\left.{z}_{2}\right|{z}_{f}\right) = \frac{1}{{z}_{2} \sqrt{2 {πσ}_{2}^{2}}} exp \left(-\frac{{\left(log\left({z}_{2}\right)-{z}_{f}\right)}^{2}}{2 {σ}_{2}^{2}}\right)$

Because *z*₁ and *z*₂ are independent, the joint likelihood is the product of the individual likelihoods: $P \left({z}_{1},\left.{z}_{2}\right|{z}_{f}\right) = P \left(\left.{z}_{1}\right|{z}_{f}\right) . P \left(\left.{z}_{2}\right|{z}_{f}\right)$

Assuming a quadratic prior distribution for *z_{f}* reflecting the geometric origins of the problem space $P \left({z}_{f}\right) = {{Az}_{f}}^{2} for 0 \leq {z}_{f} \leq {z}_{max}$
where *zₘₐₓ* is the distance to the visible horizon and A is a normalisation factor that ensures the total probability integrates to 1. Hence
such that: ${\int }_{0}^{{z}_{max}} {{Az}_{f}}^{2} {dz}_{f} = 1$
giving: ${\left[\frac{{{Az}_{f}}^{3}}{3}\right]}_{0}^{{z}_{max}} = 1$ $A = \frac{3}{{z}_{max}^{3}}$

Now, according to Bayes theorem, the posterior distribution is determined as: $P \left(\left.{z}_{f}\right|{z}_{1},{z}_{2}\right) ∝ P \left({z}_{1},\left.{z}_{2}\right|{z}_{f}\right) . P \left({z}_{f}\right)$ calculating a normalising factor k that that ensures the total probability integrates to 1: ${\int }_{0}^{∞} kP \left(\left.{z}_{f}\right|{z}_{1},{z}_{2}\right) = 1$

Then, then mean of the posterior distribution *µ̂* is the expected value of *kP*(*z_{f}*|*z*₁*, z*₂) calculated as - i.e. the distance to the object: $\hat{μ} = {\int }_{{z}_{min}}^{{z}_{max}} zkP \left(\left.z\right|{z}_{1},{z}_{2}\right) dz$ while its variance (uncertainty in the distance to the object) is: ${\hat{σ}}^{2} = {\int }_{{z}_{min}}^{{z}_{max}} {z}^{2} kP \left(\left.z\right|{z}_{1},{z}_{2}\right) dz - {\hat{μ}}^{2}$

Using *zₘᵢₙ* = 1 and *zₘₐₓ* = *zₕ* (distance to the visible horizon) values for the domain of the integrals.

According to an aspect of the present disclosure, there is provided a computer-implemented method of operating an autonomous system of a maritime vessel, the computer-implemented method comprising: determining the distance to the object using any preceding claim; determining a trajectory, using the determined distance, to avoid the object, and steering the entity based on the trajectory.

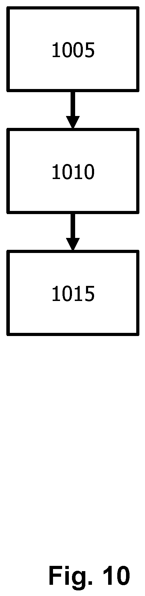

With reference to Figure 10, according to an aspect of the present disclosure, there is provided a computer-implemented method of operating an autonomous system of a maritime vessel, the computer-implemented method comprising: determining the distance to the object using any preceding method 1005; determining a trajectory, using the determined distance, to avoid the object 1010, and steering the entity based on the trajectory 1015.

Determining a trajectory may comprise an autonomous method of altering a pre-defined plan for the entity to avoid a collision or otherwise interact and/or avoid interaction with an object.

Steering the entity based on the trajectory may comprise an autopilot system that controls the entity or may include outside input such as review by an offboard crew.

According to an aspect of the present disclosure there is provided a transitory, or non-transitory, computer-readable medium having instructions stored thereon that when executed by the at least one processor, cause the at least one processor to perform the computer-implemented method of any preceding claim

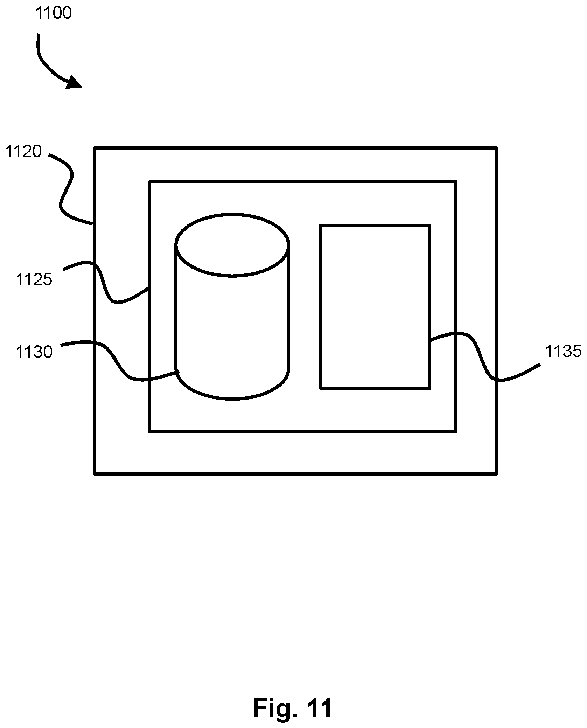

With reference to Figure 11, in one embodiment 1100 the foregoing methods may be implemented on a computer 1125 as part of an autonomous maritime vessel 1120. The computer may comprise storage 1130 and at least one processor 1135 The vessel 1120 is represented by a not to scale schematic drawing that is not a direct illustration of a vehicle. The storage may be non-transitory computer readable media having the instructions stored thereon that when executed by the at least one processor 1135, causes the at least one processor to perform the computer-implemented methods described herein. A signal for loading the instructions onto the storage may be transitory computer-readable media.

## Claims

1. A computer-implemented method of determining a distance to an object from an entity in a real-world maritime environment in which the entity operates, the computer-implemented method comprising:
capturing an image frame from a camera attached to the entity;
detecting an object in the image frame;
estimating a first distance and a first uncertainty associated with the distance to the object from the entity using a first cue;
estimating a second distance and second uncertainty associated with the distance to the object from the entity using a second cue, wherein the second clue is complementary to the first cue, and
determining the distance to the object using a combination of the first and second distance estimations and the first and second uncertainties.

2. A computer-implemented method according to claim 1, wherein estimating the first distance comprises:
generating a bounding box estimation using the object classifier model; determining dimensions of the object from the object classification, and estimating the first distance to the object by comparing the dimensions of the object to the dimensions of the bounding box.

3. A computer-implemented method according to claim 2, wherein determining the dimensions of the object from the object classification comprises:
estimating a heading of the object using the object classifier model, wherein, the object classifier model is further trained to generate an object heading from the image frame;
determining dimensions of the object using the estimated heading of the object.

4. A computer-implemented method according to claim 3, wherein determining dimensions of the object using the estimated heading of the object comprises
determining an apparent width of object *w,* using object width *W*, object length *L* and object heading *Θ* based on $w = \left|Wcos\left(θ\right)\right| + \left|Lsin\left(θ\right)\right| .$

5. The computer-implemented method of Claim 4, wherein estimating the first distance, *z*, to the object using $z = \frac{w}{2} \frac{1}{tan \left(X\frac{{H}_{FOV}}{2}\right)} ,$ where *X* is the width of the bounding box normalised as a proportion of image width, *H_{FOV}* is a horizontal field of view of the camera, and *w* is the apparent width of the object.

6. A computer-implemented method according to claim 5, wherein estimating the first uncertainty comprises:
determining an uncertainty in the apparent width ${σ}_{w}^{2}$, wherein
the uncertainty in the apparent width is predetermined according to the object classification,
determining an uncertainty in the width of the bounding box ${σ}_{X}^{2}$, wherein
the uncertainty in the width of the bounding box is proportional to the width of the bounding box, and
calculating an uncertainty of the first distance to the object estimation ${σ}_{z}^{2}$ based on ${σ}_{z}^{2} = {σ}_{w}^{2} \frac{1}{2 tan \left(\frac{1}{2}{H}_{FOV}X\right)} - {σ}_{X}^{2} \frac{w \frac{1}{2} {H}_{FOV}}{2 {sin}^{2} \left(\frac{1}{2}{H}_{FOV}X\right)}$

7. A computer-implemented method according to any preceding claim, wherein estimating the second distance comprises:
identifying a horizon line in the image frame;
determining the position of the object in the image frame;
determining a relative distance between the position of the object in the frame and the horizon line, and
estimating the second distance to the object based on the relative distance between the position of the object in the frame and the horizon line.

8. A computer-implemented method according to claim 7, wherein identifying a horizon line in the image frame comprises:
segmenting the image frame using a segmentation model trained to segment sky from water in the image; and
generating a horizon line as a line between the sky and water in the segmented image.

9. A computer-implemented method according to claim 8, wherein estimating the second distance comprises:
calculating an effective camera height, h, above the water level,
estimating a radius of the earth R_{E};
calculating an angle *α* subtended between the visible horizon and the geometric horizon using $α = {cos}^{- 1} \left(\frac{{R}_{E}}{{R}_{E} + h}\right) ;$
calculating an angle *φ* subtended between the object and the visible horizon using the proportionality between the camera vertical field of view and camera resolution, and
estimating the second distance z to the object based on $z = \left({R}_{E}+h\right) sin \left(φ+α\right) - \sqrt{{R}_{E}^{2} - {\left[\left({R}_{E}+h\right) cos\left(φ+α\right)\right]}^{2}}$

10. A computer-implemented method according to claim 8 or 9, wherein estimating the second uncertainty comprises:
calculating an uncertainty associated with the position of the object in the frame;
calculating an uncertainty associated with the horizon line position;
calculating an uncertainty associated with the horizon line angle;
and
estimating the uncertainty in the second distance by combining the uncertainties in the position of the object in the frame, horizon position and horizon line angle.

11. The computer-implemented method of Claim 9 or Claim 10, wherein
calculating the effective camera height above a water level comprises: determining a sea state value, and
calculating the effective camera height using a Rayleigh distribution of wave height at the sea state value.

12. A computer-implemented method according to any preceding claim, wherein determining the distance to the object using a combination of the first and second distance estimations and the first and second uncertainties comprises:
constructing a first distribution using the first uncertainty;
constructing a second distribution using the second uncertainty; and
determining the distance to the object using the first distribution and the second distribution.

13. The computer-implemented method of Claim 12, further comprising: generating a fused uncertainty for determining the distance to the object using a combination of the first and second distributions.

14. A computer-implemented method according to claim 13, wherein generating the fused uncertainty for the distance estimate using a combination of the first and the second distributions comprises: fusing the first and second uncertainties using Bayesian fusion.

15. A computer-implemented method of operating an autonomous system of a maritime vessel, the computer-implemented method comprising:
determining the distance to the object using any preceding claim;
determining a trajectory, using the determined distance, to avoid the object, and
steering the entity based on the trajectory.
